# EUROPEAN PATENT APPLICATION

(11) **EP 4 064 423 A1**
(43) Date of publication of application: **28.09.2022**
(21) Application number: 21762992.2
(22) Date of filing: 05.02.2021
(51) Int. Cl.: H01M 10/658, F16L 59/02, F16L 59/04

(54) **THERMAL INSULATION ELEMENT FOR BATTERIES**

(71) Applicant: Aerogel R&D Pte. Ltd., 059413 Chinatown Point, Singapore (SG)
(72) Inventor: PARK, Jong Chul, 648157 (SG)
(74) Representative: Gevers Patents
(86) International application number: PCT/KR2021/001594
(87) International publication number: WO 2022/169005

(57) **Abstract**

An insulation device for a battery according to an embodiment includes: a first cover layer including a first hole; a second cover layer attached to one surface of the first cover layer and including a second hole; and a third cover layer disposed on the opposite surface to which the first cover layer is attached on the second cover layer, wherein the insulation device may include an insulation part inside, and the insulation part may include a functional filler.

## Description

### CROSS-REFERENCE TO RELATED APPLICATION

This application claims priority to and the benefit of Korean Patent Application No. 10-2021-0016832 filed in the Korean Intellectual Property Office on February 05, 2021, the entire contents of which are incorporated herein by reference.

### BACKGROUND OF THE INVENTION

### (a) Field of the Invention

The present invention relates to an insulation device for a battery applied to an electric vehicle.

### (b) Description of the Related Art

Recently, research has been actively conducted on using a secondary battery as a power source for driving a hybrid vehicle or an electric vehicle, or a power storage source using a high energy density characteristic thereof.

As such, in the hybrid vehicle or the electric vehicle, it is applied in a form of a battery cell including a plurality of secondary batteries electrically connected in series and/or in parallel as a battery pack that accommodates a battery module including a plurality of battery cells therein.

One of major research tasks in such a battery pack is to improve safety of the battery pack. For example, if the secondary battery is heated up due to an internal short circuit, an overcharge, and an over-discharge, etc. in the battery cell, an electrolyte decomposition reaction and a thermal runaway phenomenon occur, and pressure inside the battery rapidly rises, thereby causing an explosion of the battery cell.

When the explosion is caused in the battery cell as described above, secondary ignition of the explosion may occur in an adjacent battery cell, and such an explosion may inflict fatal damage to a user other than simply damaging the battery cell.

Therefore, it is necessary to develop a technology that may improve the safety of the battery module and battery pack.

### SUMMARY OF THE INVENTION

The present embodiment intends to provide an insulation device for a battery that may effectively implement insulation performance by applying it to a battery module and a battery pack.

An insulation device for a battery according to an embodiment includes: a first cover layer including a first hole; a second cover layer attached to one surface of the first cover layer and including a second hole; and a third cover layer disposed on the opposite surface to which the first cover layer is attached on the second cover layer, wherein the insulation device may include an insulation part inside, and the insulation part may include a functional filler.

A filling density of the functional filler included in the insulation part may be 0.05 g/cm³ to 0.20 g/cm³ range.

The average thickness of the first cover layer may be in a 10 µm to 50 µm range.

The first cover layer may include at least one among a polyimide (PI) film, a polyethylene terephthalate (PET) film, a cyclic olefin polymer (COP) film, a cast polypropylene (CPP) film, and a nylon film.

The average thickness of the second cover layer may be in a 10 µm to 50 µm range.

The second cover layer may include at least one of aluminum and mica.

The average thickness of the third cover layer may be in a 0.1 mm to 1.5 mm range.

The third cover layer may include at least one of a glass fiber, a silica wool, a mineral wool, a ceramic wool, a woven fiber, and a non-woven fabric fiber.

The third cover layer may be configured of a material having a density in a 30 g/m² to 200 g/m² range.

The average thickness of the insulation device may be 4 mm or less.

In the present embodiment, the insulation device may include two or more exterior materials including the first cover layer, the second cover layer, and the third cover layer, and two or more exterior materials may be attached through a sealing part positioned on the edge of the second cover layer.

The sealing part may include at least one of acryl-based adhesives, silicon-based adhesives, rubber-based adhesives, polyphthalate adhesives, PPA adhesives (acid modified polypropylene), and PEA adhesives (acid modified polyethylene).

The average diameter of the first hole may be 15 µm or less.

The first cover layer may include a plurality of first holes, and the interval between the first holes may be 0.5 cm or less.

The average diameter of the second hole may be 15 µm or less.

The second cover layer may include a plurality of second holes, and the interval between the second holes may be 0.5 cm or less.

In the present embodiment, the first hole and the second hole may be integrally formed.

The functional filler may include at least one of an aerogel powder, fumed silica, and glass bubbles.

The aerogel powder may be included at 50 weight% to 100 weight% range based on the functional filler of 100 weight%.

The average particle diameter of the functional filler may be 100 µm or less.

The insulation part may further include a first additive.

The first additive may include at least one among titanium dioxide (TiO₂), aluminum oxide (Al₂O₃), iron oxide (Fe₂O₃), and aluminum oxide (Al₂O₃).

The content of the first additive may be in a 1 weight% to 20 weight% range based on the functional filler of 100 weight%.

The insulation part may further include a second additive.

The second additive may include at least one among magnesium hydroxide (MDH), aluminum hydroxide (ATH), zinc borate, GREP-EG (graphite), and antimony trioxide.

The content of the second additive may be in a 1 weight% to 20 weight% range for the functional filler of 100 weight%.

An insulation device according to another embodiment includes the insulation device including two or more exterior materials including the first cover layer, the second cover layer, and the third cover layer, and two or more exterior materials may be attached through an adhesive layer disposed between the second cover layer and the third cover layer.

The adhesive layer may include at least one of a polyester film, a polypropylene film, a polyurethane film, an ethylene vinyl acetate (EVA) film, a polyolefin film, polyamide film, a polyethylene terephthalate (PET) film, and an acrylate film.

The adhesive layer may include a third hole, and the third hole may be integrally formed with the first and second holes.

According to the embodiment, when the insulation device for the battery according to the present embodiment is applied, a battery module and a battery pack having excellent insulation performance may be implemented.

Specifically, in the present embodiment, the insulation device having the high insulation effect inherent in the functional filler may be implemented by filling the insulation part with the functional filler at a high density without a binder.

### BRIEF DESCRIPTION OF THE DRAWINGS

FIG. 1 is a cross-sectional view schematically showing an insulation device for a battery according to an embodiment.
FIG. 2 is a cross-sectional view schematically showing an insulation device for a battery according to an embodiment.
FIG. 3 is a view showing insulation performance test results for an insulation device according to a first embodiment.
FIG. 4 is a view showing insulation performance test results for an insulation device according to a second embodiment.
FIG. 5 is a view showing results of an insulation performance test for an insulation device manufactured according to a first reference example.
FIG. 6 is a view showing results of an insulation performance test for an insulation device manufactured according to a second reference example.
FIG. 7 is a view showing results of an insulation performance test for a first comparative example.
FIG. 8 is a view showing a result of an insulation performance test for a second comparative example.

### DETAILED DESCRIPTION OF THE EMBODIMENTS

Terms used throughout the specification, such as 'first', 'second', 'third', etc., can be used to describe various portions, components, regions, layers, and / or sections, but are not limited thereto. These terms are used only to differentiate any portion, component, region, layer, or section from other portions, components, regions, layers, or sections. Therefore, a first portion, component, region, layer, section, and the like which are described below may be mentioned as a second portion, component, region, layer, section, and the like within a range without deviating from the scope of the present invention.

The terminologies used hereafter are only for describing specific embodiments and are not intended to limit the present invention. Singular terms used herein include plural terms unless phrases clearly express opposite meanings. The term 'including' used herein embodies concrete specific characteristics, regions, positive numbers, steps, operations, elements, and/or components, without limiting existence or addition of other specific characteristics, regions, positive numbers, steps, operations, elements, and/or components.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

Unless otherwise stated, % means wt%, and 1 ppm is 0.0001 wt%.

If not defined differently, all terminologies including technical terminologies and scientific terminologies used herein have meanings that are the same as ones that those skilled in the art generally understand. Terms defined in dictionaries should be construed as having meanings corresponding to the related prior art documents and those stated herein, and are not to be construed as being idealized or official, if not so defined.

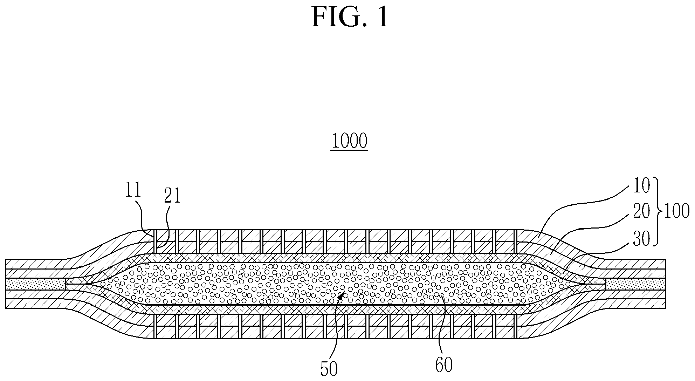

FIG. 1 is a cross-sectional view schematically showing an insulation device for a battery according to an embodiment.

Referring to FIG. 1, an insulation device for a battery 1000 according to an embodiment includes a first cover layer 10, a second cover layer 30, and a third cover layer 30, which are sequentially stacked.

The first cover layer 10 includes a first hole 11.

The second cover layer 20 is attached to one surface of the first cover layer 10 and includes a second hole 21.

The third cover layer 30 is positioned on the surface opposite to the surface to which the first cover layer 10 is attached on the second cover layer 20.

At this time, the third cover layer 30 may be a structure in which the second cover layer 20 is attached or may be a structure in which it is not attached.

The insulation device 1000 includes an insulation part 50 inside, and the insulation part 50 includes a functional filler 60.

In the present embodiment, a filling density of the functional filler 60 included in the insulation part 50 may be 0.05 g/cm³ to 0.20 g/cm³, and in detail, in a 0.10 g/cm³ to 0.15 g/cm³ range.

When the filling density of the functional filler satisfies 0.05 g/cm³, excellent insulation performance may be secured. In addition, when the filling density of the functional filler exceeds 0.15 g/cm³, the effect of improving the insulation performance is insignificant and only the amount of the functional filler is increased, so there is a problem that the cost of the production increases and the economy is significantly lowered.

The average thickness of the first cover layer 10 may be 10 µm to 50 µm range, and in detail, 15 µm to 30 µm. When the average thickness of the first cover layer exceeds 50 µm, there is a problem of increasing the thickness of the product without showing a more favorable effect on the insulation performance. In addition, there may be a problem that the first and second holes formed in the first and second cover layer become clogged. Further, when the average thickness of the first cover layer is 10 µm or less, there is a problem in that the second cover layer may not be protected from external impact.

The first cover layer 10 may be an outer layer that serves to protect the insulation device of the present embodiment from an external environment. The first cover layer, for example, may include at least one among a polyimide (PI) film, a polyethylene terephthalate (PET) film, a cyclic olefin polymer (COP) film, a casting polypropylene (CPP) film, and a nylon film.

The average thickness of the second cover layer 20 may be in a 10 µm to 50µm range, and in detail, in a 20 µm to 40 µm range. When the average thickness of the second cover layer exceeds 50 µm, there is a problem of increasing the thickness of the product without showing a more favorable effect on the insulation performance. In addition, there may be a problem that the first and second holes formed in the first and second cover layers become clogged. In addition, when the average thickness of the second cover layer is less than 10 µm, there is a problem that it is difficult to maintain the shape of the insulation device. Further, it is difficult to protect the third cover layer and the functional filler from external heat.

The second cover layer blocks heat and fire and maintains the shape of the insulation device. The second cover layer may include, for example, at least one of aluminum and mica.

Next, the average thickness of the third cover layer 30 may be in a 0.1 mm to 1.5 mm range, in detail, in a 0.2 mm to 1.0 mm range. When the average thickness of the third cover layer exceeds 1.5 mm, the filling space of the functional filler is reduced, which makes it difficult to implement the insulation device with the average thickness of less than 2.0 mm. In addition, the entire density of the insulation device increases, thereby increasing the weight of the battery pack.

In addition, when the average thickness of the third cover layer is less than 0.1 mm, it is difficult to uniformly maintain the functional filler of the powdered shape filled in the insulation part.

The third cover layer is basically composed of a material with the insulation performance. Therefore, the third cover layer serves to maintain the shape of the insulation device along with the insulation performance of the insulation device and to form an internal structure capable of maintaining a uniformly distributed state of the functional filler.

The third cover layer may include, for example, at least one of a glass fiber, a silica wool, a mineral wool, a ceramic wool, a woven fiber, and a non-woven fabric fiber.

As such, since the third cover layer is composed of a material having an inner void, in the present embodiment, the functional filler filled in the insulation part may be positioned within the void of the third cover layer.

In addition, the third cover layer may be composed of a material having a density in the range of 30 g/m² to 200 g/m², and more specifically, in the range of 50 g/m² to 130 g/m². If the density of the third cover layer exceeds 200 g/m², the entire density of the insulation device increases, resulting in increased heat conduction and the insulation effect may be deteriorated. In addition, it is possible to increase the weight of the battery pack.

In addition, when the density of the third cover layer is less than 30 g/m², it is not sufficient to maintain the shape of the insulation device, and it is difficult to maintain the functional filler uniformly.

In the present embodiment, the average thickness of the insulation device may be 4 mm or less, and more specifically, 1.0 mm to 3.5 mm, or in a range of 1.5 mm to 2.0 mm. If the average thickness of the insulation device is less than 1.0 mm, it is difficult to perform the function as the insulation device. In addition, if the average thickness of the insulation device exceeds 4 mm, there is a problem that the space occupied by the insulation device increases in the battery pack and the energy density of the battery pack is deteriorated.

Meanwhile, the insulation device 1000 includes 2 or more exterior materials 100 including the first cover layer 10, the second cover layer 20, and the third cover layer 30, and the 2 or more exterior materials may be attached through a sealing part 40 positioned at the border of the second cover layer 20.

The sealing part may include, for example, at least one of acryl-based adhesives, silicon-based adhesives, rubber-based adhesives, polyphthalate adhesives, PPA adhesives (acid modified polypropylene), and PEA adhesives (acid modified polyethylene).

Next, the average diameter of the first hole 11 in the first cover layer 10 may be 15 µm or less, and more specifically 1 µm to 10 µm, or in a 5 µm to 10 µm range. When the average diameter of the first hole is 15 µm or less, it is possible to prevent leakage of the powder-type functional filler to the outside and to secure air permeability. Specifically, since the first hole acts as a passage through which heat may move, the insulation effect of the insulation device may be further improved.

On the other hand, if the average diameter of the first hole is less than 1 µm, the first hole may be easily clogged due to external impact and it is difficult to secure the air permeability.

The first cover layer 10 includes a plurality of first holes 11.

In addition, the interval between the first holes may be 0.5 cm or less, more specifically 0.3 cm to 0.5 cm or in a 0.35 cm to 0.4 cm range. When the interval between the first holes satisfies the range, the ventilation is smooth and the insulation device is easy to compress or restore against the external impact, which is advantageous in maintaining the shape of the insulation part.

The average diameter of the second hole may be 15 µm or less, and more specifically, 1 µm to 10 µm or in a 5 µm to 10 µm range. When the average diameter of the second hole is 15 µm or less, it is possible to block the leakage of the powder-type functional filler to the outside and ensure the permeability.

Specifically, since the second hole acts as a passage through which heat may travel, the insulation effect of the insulation device may be further improved.

On the other hand, if the average diameter of the second hole is less than 1 µm, the first hole may be easily clogged due to the external impact, and it is difficult to secure air permeability.

The second cover layer 20 includes a plurality of second holes 21.

In addition, the interval between the second holes may be 0.5 cm or less, more specifically 0.3 cm to 0.5cm or in a 0.35 cm to 0.4 cm range. If the interval between the second holes satisfies the range, the ventilation is smooth and the insulation device may be easily compress or restore against the external impact, which is advantageous in maintaining the shape of the insulation part.

In the present embodiment, the first hole and the second hole may be integrally formed.

That is, in the state where the first cover layer and the second cover layer are attached, the hollowed first and second holes may be formed through a single process.

Meanwhile, the functional filler 60 may include at least one of, for example, an aerogel powder, a fumed silica, and glass bubbles.

When the aerogel powder is filled with the functional filler 60, the content may be included in a range of 50 weight% to 100 weight%, or 80 weight% to 100 weight%, based on 100 weight% of the functional filler. When the content of the aerogel powder satisfies the range, the insulation device with improved insulation performance may be implemented.

The average particle diameter of the functional filler may be 100 µm or less, more specifically 10 µm to 80 µm, or in a 20 µm to 50 µm range. If the average particle diameter of the functional filler satisfies the range, the functional filler may be evenly distributed in the insulation part, and it does not leak out through the first and second holes formed in the first and second cover layers.

In the present embodiment, the insulation part 50 may further include a first additive.

The first additive may include at least one of titanium dioxide (TiO₂), aluminum oxide (Al₂O₃), iron oxide (Fe₂O₃), and aluminum oxide (Al₂O₃).

The content of the first additive may range from 1 weight% to 20 weight%, or 5 weight% to 15 weight%, based on 100 weight% of the functional filler.

When the content of the first additive satisfies the range, the insulation performance may be further improved by suppressing the increase in thermal conductivity of the insulation device even in a high temperature environment.

The insulation part 50 may further include a second additive.

The second additive may include at least one among magnesium hydroxide (MDH), aluminum hydroxide (ATH), zinc borate, GREP-EG (graphite), and antimony trioxide.

The content of the second additive may range from 1 weight% to 20 weight%, or 3 weight% to 10 weight%, based on 100 weight% of the functional filler. When the content of the second additive satisfies the range, when a fire occurs in the battery pack, the second additive is decomposed during the combustion process to release water and non-combustible gases such as nitrogen, ammonia, or carbon dioxide, thereby cooling and diluting oxygen, and simultaneously producing water, which may delay the fire.

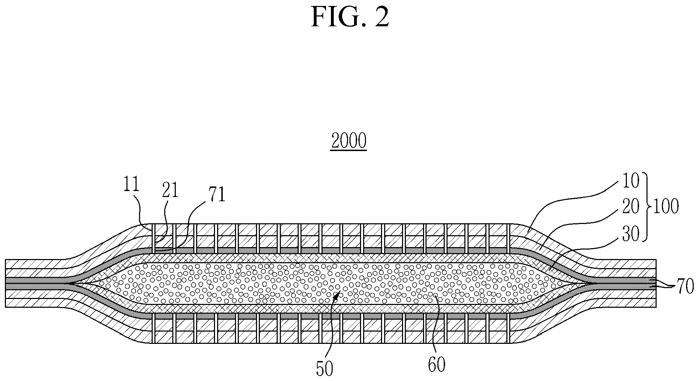

FIG. 2 is a cross-sectional view schematically showing an insulation device for a battery according to another embodiment.

Referring to FIG. 2, the insulation device 2000 according to another embodiment includes two or more exterior materials 100 including a first cover layer 10, a second cover layer 20, and a third cover layer 30, and two or more exterior materials 100 may be attached through an adhesive layer 70 positioned between the second cover layer 20 and the third cover layer 30a.

At this time, the adhesive layer 70 may include at least one of a polyester film, a polypropylene film, a polyurethane film, an ethylene vinyl acetate (EVA) film, a polyolefin film, a polyamide film, a polyethylene terephthalate (PET) film, and an acrylate film. That is, the insulation device 2000 of the present embodiment may be closed and sealed using a method such as thermal fusion through the adhesive layer 70.

The adhesive layer 70 may include a third hole 71, and the third hole 71 may be integrally formed with the first hole 11 and the second hole 21.

In the present embodiment, the other configuration except for the adhesive layer 70 is the same as that described with reference to FIG. 1 in the insulation device for the battery according to an embodiment.

In the insulation device for the battery according to the present embodiment, the remaining configurations other than the above-described configuration are the same as described in the insulation device for the battery of an embodiment described with reference to FIG. 1. Thus, the same reference numerals are used in FIG. 2 and the detailed descriptions are omitted here.

Next, an embodiment of the present invention is described in detail. However, this is presented as an example, whereby the present invention is not limited, and the present invention is only defined by the scope of the claims range to be described later.

### Embodiment 1

A nylon film with a thickness of 25 µm as the first cover layer, an aluminum layer with a thickness of 40 µm as the second cover layer, and a glass fiber chopped mat having a density of 120 g/m² and a thickness of 0.4 mm as the third cover layer were prepared.

After attaching the first and second cover layers, the first and second holes with the average diameter of 10 µm were formed in the first and second covers with an interval of 3.5 mm.

Next, two exterior materials in which the third cover layer was positioned on the opposite surface to which the first cover layer was attached in the second cover layer were prepared, and then two exterior materials were sealed by forming a sealing part on the edge of the second cover layer.

Next, the insulation device having an average thickness of 2 mm was manufactured by filling the insulation part inside the sealed exterior material so that the density of the aerogel powder was 0.114 g/cm³. At this time, the average particle diameter of the aerogel powder was 20 µm.

### Embodiment 2

An insulation device was manufactured by the same method as in the Embodiment 1, except that the insulation part was filled so that the density of the aerogel powder was 0.141 g/cm³.

### Reference 1

An insulation device was manufactured by the same method as in the Embodiment 1, except that the insulation part was filled so that the density of the aerogel powder was 0.057 g/cm³.

### Reference 2

An insulation device was manufactured by the same method as in the Embodiment 1, except that the insulation part was filled so that the density of the aerogel powder was 0.171 g/cm³.

### Comparative Example 1

A sheet of mica having a thickness of 2 mm was prepared.

### Comparative Example 2

After preparing an E-glass mat having a thickness of 8 mm, it was pressed to have a thickness of 2 mm.

### Experimental Example 1

For the insulation devices manufactured according to the Embodiments 1 and 2, the Reference Examples 1 and 2, and the Comparative Examples 1 to 2, insulation performance was measured.

Specifically, Dulytek (US)'s hot press (DHP7 V4 HYDRAULIC HEAT PRESS) equipment and YOKOGAWA (JP)'s temper coder (FX1000) were used.

The equipment includes an upper hot plate and a lower hot plate, wherein the upper hot plate is heated to 200 °C and maintained and the lower hot plate is set so as to be 25 °C.

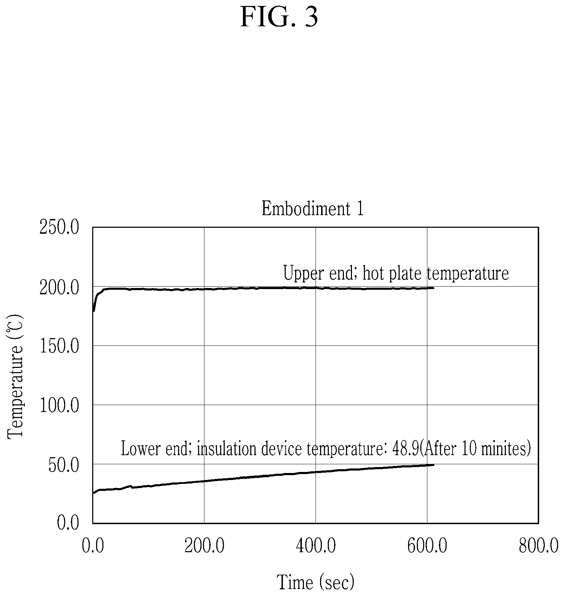

Next, after placing the insulation device according to the Embodiments 1 and 2, the Reference Examples 1 and 2, and the Comparative Examples 1 and 2 between the upper plate and the lower plate, the temperature of the insulation device positioned on the lower hot plate was measured after a certain period of time had elapsed. The results thereof are shown in FIG. 3 to FIG. 8.

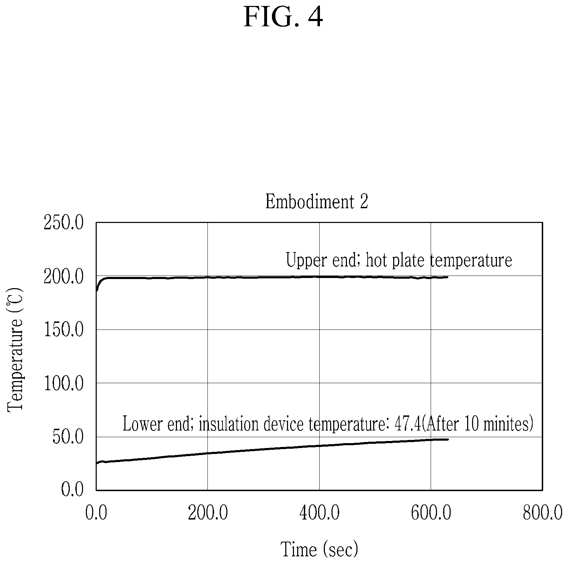

Referring to FIG. 3 and FIG. 4, in the insulation device according to the Embodiments 1 and 2, it may be confirmed that the temperature of the insulation device positioned on the lower hot plate was 48.9 °C and 47.4 °C, respectively, which is less than 50 °C even after 10 minutes.

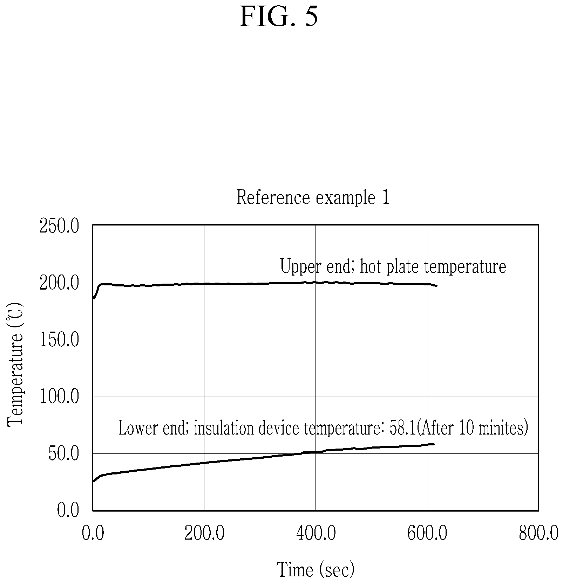

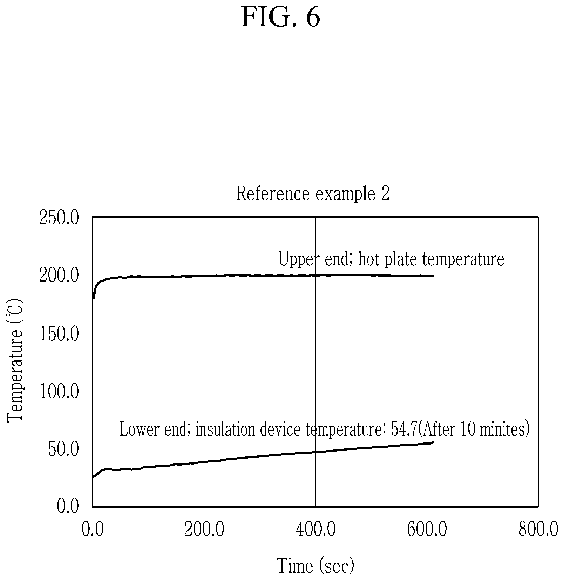

Referring to FIG. 5 and FIG. 6, In the insulation device according to the Reference Examples 1 and 2, the temperature of the insulation device positioned on the lower hot plate after 10 minutes was 58.1 °C and 54.7 °C, respectively.

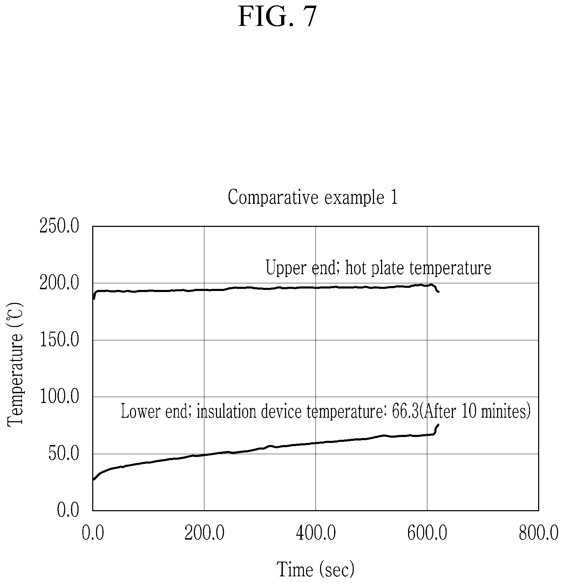

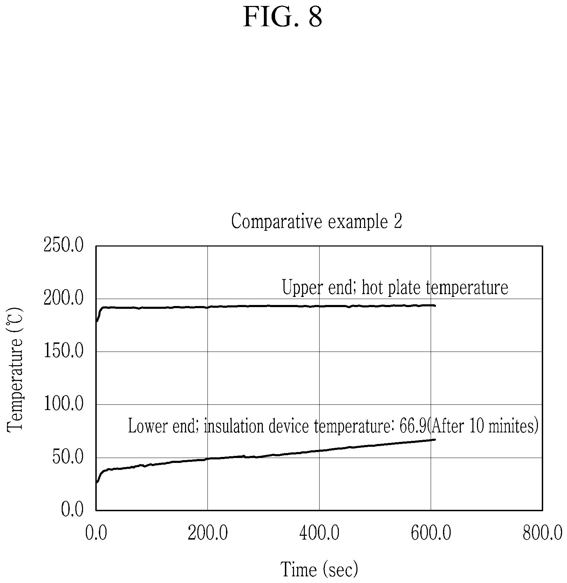

Referring to FIG. 7 and FIG. 8, for the sheets according to the Comparative Examples 1 and 2, the temperature of the insulation device positioned on the lower hot plate after 10 minutes was 66.3 °C and 66.9 °C, respectively.

In other words, it may be seen that the insulation performance of the insulation devices according to the Embodiments 1 and 2 and the Reference Examples 1 and 2, in which the insulation part is filled with the aerogel powder, increases by at least 13 % compared to the Comparative Examples 1 and 2.

In particular, in the case of the Embodiments 1 and 2 where the filling density of the aerogel powder satisfies the range of 0.05 g/cm³ to 0.15g/cm³, it may be confirmed that the insulation performance was improved by at least 27 % or more compared to the Comparative Examples 1 and 2 that are not filled with the aerogel powder

In addition, in the case of the Embodiments 1 and 2, it may be seen that the insulation performance is improved by at least 20 % or more even compared to the cases of the Reference Examples 1 and 2 in which the filling density of the aerogel powder is out of the range of the present embodiment.

Although exemplary embodiments of the present invention were described above, those skilled in the art would understand that the present invention may be implemented in various ways without changing the spirit or necessary features. Therefore, the embodiments described above are only examples and should not be construed as being limitative in any respects.

### <Description of symbols>

1000, 2000: the insulation device for the battery
10: first cover layer
20: second cover layer
30: third cover layer
40: sealing part
50: insulation part
60: functional filler
100: exterior material

## Claims

1. A insulation device for a battery, comprising:
a first cover layer including a first hole;
a second cover layer attached to one surface of the first cover layer and including a second hole; and
a third cover layer disposed on the opposite surface to which the first cover layer is attached on the second cover layer,
wherein the insulation device includes an insulation part inside, and
the insulation part includes a functional filler.

2. The insulation device for the battery of claim 1, wherein
a filling density of the functional filler included in the insulation part is in a 0.05 g/cm³ to 0.20 g/cm³ range.

3. The insulation device for the battery of claim 1, wherein
the average thickness of the first cover layer is in a 10 µm to 50 µm range.

4. The insulation device for the battery of claim 1, wherein
the first cover layer includes at least one among a polyimide (PI) film, a polyethylene terephthalate (PET) film, a cyclo olefin polymer (COP) film, a cast polypropylene (CPP) film, and a nylon film.

5. The insulation device for the battery of claim 1, wherein
the average thickness of the second cover layer is in a 10 µm to 50 µm range.

6. The insulation device for the battery of claim 1, wherein
the second cover layer incudes at least one of aluminum and mica.

7. The insulation device for the battery of claim 1, wherein
the average thickness of the third cover layer is in a 0.1 mm to 1.5 mm range.

8. The insulation device for the battery of claim 1, wherein
the third cover layer includes at least one of a glass fiber, a silica wool, a mineral wool, a ceramic wool, a woven fiber, and a non-woven fabric fiber.

9. The insulation device for the battery of claim 1, wherein
the third cover layer is configured of a material having a density of 30 g/m² to 200 g/m² range.

10. The insulation device for the battery of claim 1, wherein
the average thickness of the insulation device is 4 mm or less.

11. The insulation device for the battery of claim 1, wherein
the insulation device includes two or more exterior materials including the first cover layer, the second cover layer, and the third cover layer, and
two or more exterior materials are attached through a sealing part positioned on the edge of the second cover layer.

12. The insulation device for the battery of claim 11, wherein
the sealing part includes at least one of acryl-based adhesives, silicon-based adhesives, rubber-based adhesives, polyphthalate adhesives, PPA adhesives (acid modified polypropylene), and PEA adhesives (acid modified polyethylene).

13. The insulation device for the battery of claim 1, wherein
the average diameter of the first hole is 15 µm or less.

14. The insulation device for the battery of claim 13, wherein
the first cover layer includes a plurality of first holes, and
the interval between the first holes is 0.5 cm or less.

15. The insulation device for the battery of claim 1, wherein
the average diameter of the second hole is 15 µm or less.

16. The insulation device for the battery of claim 15, wherein
the second cover layer includes a plurality of second holes, and
the interval between the second holes is 0.5 cm or less.

17. The insulation device for the battery of claim 1, wherein
the first hole and the second hole are integrally formed.

18. The insulation device for the battery of claim 1, wherein
the functional filler includes at least one of an aerogel powder, a fumed silica, and glass bubbles.

19. The insulation device for the battery of claim 18, wherein
the aerogel powder is included at 50 weight% to 100 weight% range based on the functional filler of 100 weight%.

20. The insulation device for the battery of claim 1, wherein
the average particle diameter of the functional filler is 100 µm or less.

21. The insulation device for the battery of claim 1, wherein
the insulation part further includes a first additive.

22. The insulation device for the battery of claim 21, wherein
the first additive includes at least one among titanium dioxide (TiO₂), aluminum oxide (Al₂O₃), iron oxide (Fe₂O₃), and aluminum oxide (Al₂O₃).

23. The insulation device for the battery of claim 21, wherein
the content of the first additive is in a 1 weight% to 20 weight% range based on the functional filler at 100 weight%.

24. The insulation device for the battery of claim 1, wherein
the insulation part further incudes a second additive.

25. The insulation device for the battery of claim 24, wherein
the second additive includes at least one among magnesium hydroxide (MDH), aluminum hydroxide (ATH), zinc borate, GREP-EG (graphite), and antimony trioxide.

26. The insulation device for the battery of claim 24, wherein
the content of the second additive is in a 1 weight% to 20 weight% range for the functional filler at 100 weight%.

27. The insulation device for the battery of claim 1, wherein
the insulation device includes two or more exterior materials including the first cover layer, the second cover layer, and the third cover layer, and
two or more exterior materials are attached through an adhesive layer disposed between the second cover layer and the third cover layer.

28. The insulation device for the battery of claim 27, wherein
the adhesive layer includes at least one of a polyester film, a polypropylene film, a polyurethane film, an ethylene vinyl acetate (EVA) film, a polyolefin film, a polyamide film, a polyethylene terephthalate (PET) film, and an acrylate film.

29. The insulation device for the battery of claim 27, wherein
the adhesive layer includes a third hole, and
the third hole is integrally formed with the first and second holes.
